# EUROPÄISCHE PATENTSCHRIFT

(11) **EP 0 749 523 B1**
(45) Veröffentlichungstag und Bekanntmachung des Hinweises auf die Patenterteilung: **01.08.2001**
(21) Anmeldenummer: 95943183.4
(22) Anmeldetag: 21.12.1995
(51) Int. Cl.: F02D 29/06, F02D 31/00, F02D 41/40

(54) **VERFAHREN ZUR REGELUNG DES LASTANNAHME- UND BESCHLEUNIGUNGSVERHALTENS VON AUFGELADENEN BRENNKRAFTMASCHINEN**
PROCESS FOR REGULATING DESIGN LOAD AND ACCELERATION BEHAVIOUR OF SUPERCHARGED INTERNAL COMBUSTION ENGINES
PROCEDE DE REGULATION DU COMPORTEMENT A L'ACCELERATION ET SOUS UNE CHARGE SUPPOSEE DE MOTEURS A COMBUSTION INTERNE SURALIMENTES

(30) Priorität: 23.12.1994 DE 4446246
(43) Veröffentlichungstag der Anmeldung: 27.12.1996
(73) Patentinhaber: MTU MOTOREN- UND TURBINEN-UNION FRIEDRICHSHAFEN GMBH, 88040 Friedrichshafen (DE)
(72) Erfinder: ÖSTREICHER, Wolfgang, D-88046 Friedrichshafen (DE); ZELLBECK, Hans, D-88131 Lindau (DE)
(74) Vertreter: Winter, Josef
(86) Internationale Anmeldenummer: EP9505081
(87) Internationale Veröffentlichungsnummer: WO9620337

(56) Entgegenhaltungen:
- DE-A- 3 546 054
- DE-A- 4 113 958
- FR-A- 2 500 065
- GB-A- 1 460 632
- US-A- 3 673 796
- US-A- 4 397 285
- US-A- 4 720 977

## Beschreibung

Die Erfindung betrifft ein Verfahren zur Regelung des Lastannahmeverhaltens einer Brennkraftmaschine mit einem oder mehreren Turboladern nach dem Oberbegriff des Patentanspruchs 1.

Bei stationärem Betrieb einer Brennkraftmaschine mit Abgasturboladern wird das von der Brennkraftmaschine abgegebene Drehmoment nicht allein durch den inneren Wirkungsgrad der Brennkraftmaschine bestimmt, sondern ist zudem von dem Wechselspiel zwischen Zylinder und Abgasturbolader abhängig. So erreicht eine aufgeladene Brennkraftmaschine beim Übergang von einer stationären Laststufe zu einer anderen höheren stationären Laststufe, dem sogenannten transienten Betrieb, die auszuregelnde Laststufe erst nach einer deutlichen Anlaufszeit. Diese Zeitdauer bis zum Erreichen der Soll-Laststufe wird maßgeblich durch das Beschleunigungsvermögen des Turboladers bestimmt. Dadurch bedingt wird bei großer Lastaufschaltung während dieser Anlaufzeit die abverlangte Motorleistung nicht sofort erreicht. Dies bedeutet speziell bei jeder Lastzuschaltung und jeder Beschleunigung der Brennkraftmaschine, daß zunächst nur momentane Leistungswerte erreicht werden, die niedriger liegen, als die erst mit beträchtlicher Verzögerung erzielbaren Leistungspunkte, die zur Ausregelung des neuen stationären Betriebspunktes erforderlich sind.

Außerdem ist das Ausmaß der Abweichung der momentan erreichbaren Leistung von der stationären Soll-Laststufe vom Ausgangspunkt der jeweiligen Beschleunigung abhängig, wobei in niedrigen Drehzahlbereichen beträchtliche Abweichungen auftreten können.

Die Ursache hierfür ist, daß bei einer Beschleunigung aus einem Betriebspunkt niedriger Drehzahl und niedrigen Drehmoments der Ladeluftdruck und damit die der Verbrennung zur Verfügung stehende Luftmasse im Zylinder nicht ausreicht, um die zur Darstellung der Laststufe bzw. des Betriebspunktes erforderliche Brennstoffmasse umzusetzen.

Neben dem begrenzten Beschleunigungsvermögen des Turboladers ist das Beschleunigungsvermögen des Motors auch durch sein Leistungspotential unter Ausnutzung der vorbestimmten mechanischen und thermischen Belastungsgrenzen bestimmt. Die mechanische Belastbarkeit wird dabei maßgeblich durch den Verbrennungshöchstdruck bestimmt, welcher wiederum wesentlich durch den an dem Zylinder anstehenden Ladeluftdruck beeinflußt wird. Der maximal zulässige Zylinderinnendruck stellt also die Grenze für das bei Bedarf maximal entfaltbare Beschleunigungsvermögen der Brennkraftmaschine dar. Wird die Brennkraftmaschine über diese Oberdruckgrenze und über einen vorgegebenen Zeitraum hinaus beansprucht, so führt dies zu Beschädigungen des Motors. Folglich ist eine beliebige Steigerung der Motorleistung zur Lastausregelung auch aufgrund der Motorbelastungsgrenze nicht möglich.

Wegen dieses Überlastungsrisikos für die Brennkraftmaschine kommt den vorstehend geschilderten Parametern, insbesondere für den Betrieb eines aufgeladenen Dieselmotors als Antrieb in Generatoranlagen wesentliche Bedeutung zu. Bezeichnend für die Betriebsanforderungen eines solchen Aggregatantriebs ist die Generatorlastaufschaltung, bei welcher die Brennkraftmaschine, z. B. aus dem Leerlaufbetrieb, innerhalb eines kürzest möglichen Zeitraums auf Vollast hochgeregelt werden muß. Erschwerend hinzu kommt die Forderung an die gesamte Generatoranlage, die Motorabgangsdrehzahl während sämtlicher Motorregelzustände weitgehend konstant zu halten, damit die vom Generator erzeugte elektrische Leistung möglichst mit Nennfrequenz ins Netz gespeist werden kann. Speziell diese letztgenannte Forderung kann bei herkömmlichen Generatorantriebsanlagen nicht immer zufriedenstellend erfüllt werden. Problematisch ist der prinzipiell auftretende, ausgeprägte Drehzahleinbruch der antreibenden Brennkraftmaschine bei der plötzlichen Generatoraufschaltung. Wegen dieses lastbedingten Drehzahlrückgangs kann im Anwendungsfall als Notstromaggregat die geforderte Frequenz erst nach einer zeitlichen Verzögerung erreicht werden.

Als ein Ansatz zur Erfüllung dieser Betriebsanforderungen ist aus der DE 35 46 054 C2 ein Kraftstoffzufuhrsteuerverfahren bekannt, bei dem die Antriebsleistung im transienten Betrieb, nämlich bei Motorbeschleunigungen und -verzögerungen, durch Regelung der zugeführten Kraftstoffmenge in Abhängigkeit des Abgasdrucks beeinflußt wird. Dabei wird entsprechend des jeweiligen Abgasgegendruckwerts eine Korrekturkraftstoffmenge bestimmt, welche dann zusätzlich zu der im stationären Betriebszustand des Motors bemessenen Basiskraftstoffmenge eingespritzt wird. Obwohl sich bei dem darin beschriebenen Verfahren entsprechend den jeweiligen Betriebszuständen des Motors ein günstiger Kraftstoffverbrauch und gute Abgascharakteristiken ergeben, wird dabei dennoch nicht die Drehmomentzunahme im transienten Bereich und damit das Maschinenausgangsleistungsvermögen verbessert. Vielmehr wird lediglich die Kraftstoffzufuhr an das jeweils vom Motor erbrachte momentane Drehmoment angepaßt und optimiert.

Ein anderer Lösungsansatz, der sich mit der Präzisierung der Förderbeginnberechnung befaßt, wird in der DE 41 13 958 A1 vorgeschlagen. Bei dem daraus bekannten Verfahren wird ausgehend von der Motordrehzahl und zumindest einer weiteren Betriebsgröße der Brennkraftmaschine der Einspritzzeitpunkt berechnet. Um Drehzahländerungen der Brennkraftmaschine zwischen Erfassung der Drehzahl und dem Erreichen der Sollstellung des Stellgliedes zu berücksichtigen, wird bei dem darin beschriebenen Verfahren die Berechnung des Förderbeginnzeitpunktes wiederholt bis zum Eintritt der Stellgliedsollstellung berechnet. Durch dieses wiederholte Messen und Berechnen während der Reglerbetätigung der Brennkraftmaschine, kann aus den zwischenzeitlich aufgenommenen aktuellen Werten der Einspritzzeitpunkt genauer bestimmt und die Einspritzverstellung entsprechend gesteuert werden.

Damit ist aus dieser Druckschrift zwar ein Verfahren der Verbesserung des inneren Wirkungsgrades einer Brennkraftmaschine aufgezeigt, allerdings erfolgt das beschriebene Verfahren zur Förderbeginnverstellung in bekannter Weise unter stationären Gesichtspunkten in Form eines elektronischen Förderbeginnverstellers. Eine Förderbeginnverstellung, welche die Ausregelung instationären Motorbetriebs bei Lastzuschaltung oder Drehzahlerhöhung unterstützt, berücksichtigt dieses Regelverfahren jedoch nicht.

Entsprechend den Merkmalen des Oberbegriffs des Anspruchs 1 ist es aus der GB 1 460 632 bekannt, bei erkannter Lastaufschaltung der auftretenden Drehzahldrückung entgegenzuwirken, indem die Brennkraftmaschine vorübergehend dynamisch gesteuert wird. Hierzu wird jedoch den Zylindern aus einem Vorratstank Druckluft zugeführt, sodaß zusätzliche Bauteile verwendet werden müssen.

Es ist Aufgabe der Erfindung, Drehzahlregelverfahren derart weiterzubilden, daß das Leistungspotential eines aufgeladenen Dieselmotors zur Verbesserung des Lastannahmeverhaltens ausgeschöpft werden kann.

Zur Lösung der gestellten Aufgabe ist die Erfindung bei einem gattungsgemäßen Verfahren durch die kennzeichnenden Merkmale des Patentanspruchs 1 gegeben. Die Unteransprüche enthalten zweckmäßige Weiterbildungen der Erfindung.

Erfindungsgemäß wird also eine dynamische last- und motorbetriebsangepaßte vorübergehende Förderbeginnvorverstellung vorgeschlagen, um so den indizierten Mitteldruck unter Ausnutzung der konstruktiv gegebenen maximal zulässigen Zylinderinnendruckgrenze bei Lastzuschaltung und Motorbeschleunigung zu optimieren.

Hierzu macht sich das erfindungsgemäße Verfahren die Tatsache zu Nutze, daß bei aufgeladenen Dieselmotoren der an den Zylindern anstehende Ladeluftdruck eine entscheidende Einflußgröße des Verbrennungshöchstdrucks darstellt, wobei der Verbrennungsdruck tendentiell mit zunehmendem Ladeluftdruck ansteigt. Ein weiterer Effekt, den die Erfindung ebenfalls gezielt einsetzt ist, daß der Verbrennungsdruckverlauf im Zylinder bei konstantem Ladeluftdruck durch die zeitliche Lage des Förderbeginns relativ zur oberen Totpunktlage (OT) des Kolbens verändert und eine Erhöhung des erreichbaren Druckmaximums durch die Förderbeginnvorverstellung festgelegt werden können. Soll demnach ein definierter Verbrennungshöchstdruck nicht überschritten werden, darf bei hohen Ladeluftdrücken der Förderbeginn nicht beliebig weit vor den Zünd-OT gelegt werden. Bei entsprechend geringen Ladeluftdrücken, wie sie im transienten Betrieb der Motorbeschleunigung auftreten, ist dagegen ein deutlich früherer Förderbeginn möglich, ohne daß der verbrennungsabhängige Zylinderinnendruck über die Belastungsgrenze hinaus ansteigt. Bei instationärem Betrieb von aufgeladenen Dieselmotoren sieht die Erfindung daher bei Lastzuschaltung oder Motorbeschleunigung unter Ausnutzung des durch die Turboladercharakteristik verzögert aufgebauten Ladeluftdrucks und des ansonsten nachteiligen Luftmangels eine vorübergehende Verstellung des Förderbeginns nach früh vor, welche deutlich über die Grenzen einer stationären Förderbeginnzeitpunktverstellung hinausgeht.

Mit einer solchen, an den Motorbetrieb angepaßten Förderbeginnvorverstellung wird somit gezielt die Differenz zwischen dem maximal zulässigen Verbrennungshöchstdruck im Brennraum und dem sich bei herkömmlichen Regelverfahren tatsächlich im Brennraum einstellenden Verbrennungsdrucks vorübergehend als zusätzliches Beschleunigungspotential genutzt. Dieses erfindungsgemäße zusätzlich erschlossene Leistungspotential wirkt dem Drehzahleinbruch bei Lastzuschaltung entgegen und schwächt diesen ab. Dadurch stellt das durch die Förderbeginnvorverstellung erzeugte Drehmoment eine kurzfristig verfügbare zusätzliche Leistungssteigerung dar, welche zusammen mit herkömmlichen Regelverfahren für das System Abgasturbolader-Brennkraftmaschine hilft das Betriebsverhalten von aufgeladenen Dieselmotoren im transienten Betrieb zu verbessern.

Die Förderbeginnvorverstellung ergänzt damit das herkömmliche Motorregelverfahren im transienten Betrieb. Die herkömmliche Motorregelung bzw. das herkömmliche Regelverfahren wird während dieses transienten Beschleunigungsbetriebs, ebenso wie bei stationärem Betrieb des aufgeladenen Motors wie bisher beibehalten und durchgeführt.

Mittels dieser Standardregelung wird der Soll-Betriebspunkt im wesentlichen über die Füllungszustellung vorgegeben, wodurch wiederum im transienten Betrieb bereits ab dem Zeitpunkt, in dem der Regler auf die Lastaufschaltung reagiert, die zur Darstellung des Soll-Betriebspunktes erforderliche Brennstoffmasse in den Brennraum eingespritzt wird. Infolge dieser größeren Brennstoffmenge, wird eine größere Verbrennungsenergie freigesetzt, welche unter anderem zu einem allmählichen Anstieg des Ladeluftdrucks führt. Mit zunehmenden Ladeluftdrücken jedoch steigen auch die Zylinderinnendrücke an, so daß die Differenz des Zylinderinnendruckes zur Maximaldruckgrenze hin mit zunehmender Motorbeschleunigung kleiner wird. Da die allmähliche Leistungssteigerung nun von der kurzfristig zuschaltbaren Leistungssteigerung infolge der lastabhängigen Förderbeginnvorverstellung überlagert wird, kann dies zu einem Übersteigen der für stationären Motorbetrieb definierten Zylinderdruckgrenzen führen.

Hier ist eine zeitlich begrenzte Überschreitung bewußt vorgesehen. Alternativ hierzu ist vorgesehen, daß ein Überschreiten des zulässigen Zylinderspitzendrucks vermieden wird und der zwischen dem momentanen Innendruck und der Zylinderinnendruckgrenze liegende Bereich mit Hilfe einer dynamischen Förderbeginnverstellung genutzt wird. Diese dynamische Förderbeginnverstellung stellt den jeweiligen Förderbeginn in Abhängigkeit des aktuellen Zylinderdrucks und/oder des momentanen Ladeluftdrucks mit zunehmendem Ladeluftdruck wieder nach "spät". Auf diese Weise wird sichergestellt, daß bis zum Erreichen des Soll-Betriebspunktes das innerhalb der gegebenen Motorbelastungsgrenzen zur Verfügung stehende Beschleunigungspotential des Motors vollständig zur Ausregelung der Lastannahme eingesetzt werden kann.

Das Umschalten vom Motorbetrieb nach stationären Gesichtspunkten auf einen Regelbetrieb nach motordynamischen Gesichtspunkten wird jeweils an unterschiedliche Schaltkriterien gekoppelt. Dabei wird unabhängig von der Wahl des Schaltkriteriums, bei dessen Erreichen auf die Betriebsweise mit variabler Förderbeginnverstellung umgeschaltet, um so vorübergehend ein Leistungsplus des Motors zu erzeugen, mit dessen Hilfe eine plötzliche Lastzuschaltung schneller als bisher ausgeregelt werden kann.

Als vorrichtungsmäßig besonders einfach und kostengünstig vorzusehendes Schaltkriterium, erfolgt in einer bevorzugten Ausführungsform der Erfindung für Generatoranlagen die Umschaltung dann, wenn die momentane Motordrehzahl ausgehend von der jeweiligen Solldrehzahl einen vorgegebenen Drehzahlwert unterschreitet. Da ein Drehzahlsignal ohnehin bereits zur Regelung der Brennkraftmaschine vorhanden ist, kann so bei Absinken der Motordrehzahl unter die Drehzahlgrenzwertvorgabe der Förderbeginn in Richtung frühere Kurbelwinkel verstellt werden.

Eine besonders genaue Aussage über das Lastannahmeverhalten des Motors in Form eines qualitativen und quantitativen Betriebssignals ist mit einer weiteren Ausführungsform der Erfindung zu erreichen, bei welcher ausgehend von gemessenen Drehzahlsignalen der Drehzahlgradient ermittelt wird. Je nach Vorzeichen und Betrag des Drehzahlgradienten können dann Rückschlüsse auf das tatsächliche Maß der Drehzahldrückung nach Zuschalten der Last gewonnen werden. Nach Zuschaltung der Last oder Anheben des Motordrehzahlsollwertes erfolgt bei negativem Drehzahlgradienten und/oder Unterschreitung eines vorgegebenen Drehzahlgrenzwertes eine Förderbeginnverstellung nach "früh". Mit zunehmend positivem Drehzahlgradienten und/oder abnehmender Drehzahlabweichung wird die Förderbeginnverstellung kontinuierlich zurückgenommen, der Förderbeginn auf "spät" verstellt.

In einer dritten Ausführungsform ist vorgesehen, den Umschaltzeitpunkt auf dynamische Förderbeginnvorverstellung mit der im Zusammenhang mit einer frühzeitigen Füllungszustellung bei Lastzuschaltung bekannten Störgrößenaufschaltung auf den Drehzahlsollwert (Load-Pulse-Signal) zu kombinieren, um dadurch bereits vorsorglich ein zusätzliches Leistungsangebot des Motors auszulösen, bevor die Motordrehzahl unter der aufgeschalteten Last stark abfällt. Durch dieses Vorbereiten des Motors auf die zu erwartende Belastung wird nicht nur ein krasser Drehzahleinbruch verhindert, sondern der gesamte Übergangsregelbetrieb, bis die neue Laststufe erreicht und wieder stationär ausgeregelt werden kann, wird bedeutend verkürzt.

Insbesondere bei Motoren mit elektronischer Einspritzregelung, wie z. B. einem Akkumulatoreinspritzsystem, kann eine an das Load-Pulse-Signal gekoppelte Umschaltung des Regelbetriebs ohne wesentliche vorrichtungsmäßigen Veränderungen lediglich anhand schaltungstechnischer Verknüpfungen realisiert werden.

Die variable Förderbeginnvorverstellung in Abhängigkeit des tatsächlich pro Verbrennungstakt auftretenden Zylinderinnendrucks ermöglicht eine optimierte Ausnutzung des gesamten Motorbeschleunigungspotentials innerhalb der Zylinderinnendruckgrenzen. Die durchgeführte Förderbeginnrückstellung sorgt für eine dynamische Anpassung der erfindungsgemäßen zusätzlichen Leistungssteigerung an die tatsächlich im Zylinder vorherrschenden Druckbedingungen.

Die Rückschaltung vom Regelbetrieb mit dynamisch variabler Förderbeginnsverstellung auf normalen Regelbetrieb erfolgt, in Weiterbildung der Erfindung, entweder starr an eine Zeitbedingung gekoppelt oder ist an das Erreichen des Betriebspunkts höherer Laststufe geknüpft. Hierfür werden die aktuellen Motorkennwerte, speziell der Ladeluftdruck und der Zylinderinnendruck, laufend überwacht und in der elektronischen Regeleinrichtung zur Festlegung des Förderbeginns entsprechend verarbeitet.

Weitere zweckmäßige Ausgestaltungen der Erfindung sowie eine nähere Erläuterung sind in der nachfolgenden Beschreibung enthalten, die sich auf das in der Zeichnung dargestellte Ausführungsbeispiel bezieht. In der Zeichnung zeigt:
- Figur 1:: Druckverläufe im Brennraum bei jeweils zwei verschiedenen Förderbeginnzeitpunkten;
- Figur 2:: Verlauf der mechanischen Generatorleistung am Kupplungsflansch des Motors;
- Figur 3:: Verläufe der Motordrehzahl bei Lastzuschaltung;
- Figur 4:: Verläufe des Förderbeginnzeitpunktes;
- Figur 5:: Verläufe der Füllungszustellung bei Lastzuschaltung;
- Figur 6:: den Verlauf des Verbrennungshöchstdrucks während des Beschleunigungsvorganges bei Lastzuschaltung.

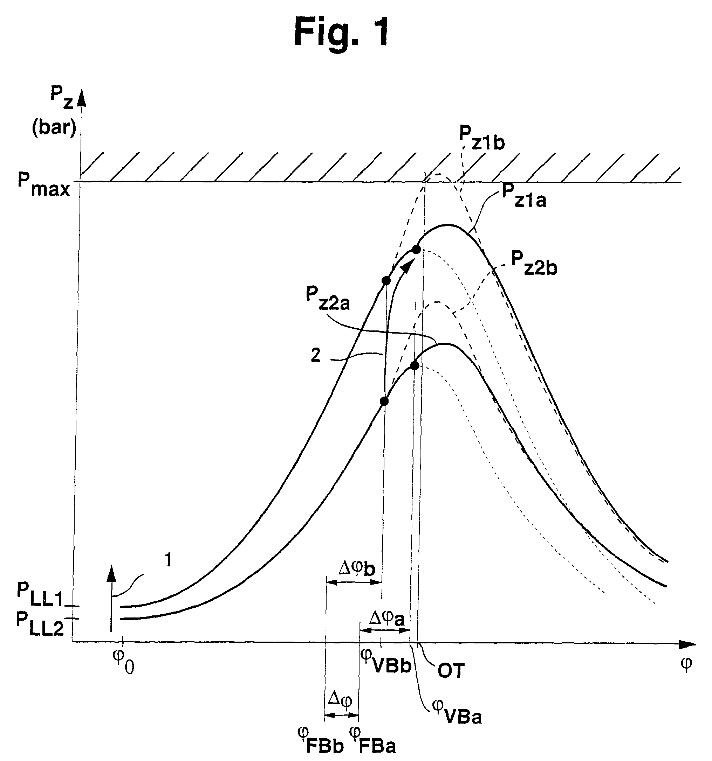

In Figur 1 sind zwei Zylinderdruckverläufe p_{z1a} und p_{z2a} dargestellt, wie sie sich bei einer herkömmlich geregelten aufgeladenen Brennkraftmaschine jeweils während eines Verbrennungstaktes ergeben. Die Füllung bzw. die eingespritzte Kraftstoffmasse ist bei den Druckverläufen p_{z2a} und p_{z2b} jeweils die gleiche; ebenso bei den Verläufen p_{z1a} und p_{z1b.} Bei dem hier dargestellten Beispiel eines Dieselmotors mit luftverteilender Direkteinspritzung entspricht der Druckverlauf p_{z2a} stellvertretend den Druckverläufen bei niedrigen Ladedrücken, während der bei entsprechend höheren Ladedrücken im Zylinder auftretende Zylinderinnendruck grundsätzlich durch einen Verlauf p_{z1a} dargestellt werden kann. Ausgehend von diesen zwei bekannten Druckverläufen p_{z1a}, p_{z2a} im Zylinder, ist ferner der in vorliegender Erfindung eingesetzte theoretische Einfluß des Förderbeginnzeitpunktes auf den Zylinderdruckverlauf exemplarisch an einem für den frühest möglichen Kurbelwinkel ϕ_{FBb} vorverstellten Förderbeginn im Vergleich zu dem stationär eingestellten Förderbeginn ϕ_{FBa} aufgezeigt.
Ferner ist das von dem auf der Abszisse aufgetragenen Kurbelwinkel ϕ und dem Zylinderinnendruck p_{z}, auf der Ordinate, aufgespannte Diagramm in Richtung hohe Zylinderinnendrücke p_{z} durch die konstruktiv vorgegebene Obergrenze des maximal zulässigen Zylinderinnendrucks pₘₐₓ begrenzt. Die pₘₐₓ-Grenze ist durch die mechanische Belastungsgrenze des jeweiligen Brennkraftmaschine konstruktiv vorgegeben. Dementsprechend können zumindest bei längerem Betrieb des Motors mit einem Anstieg des Zylinderdrucks p_{Z} über die pₘₐₓ-Grenze hinaus überlastungsbedingte Schäden auftreten. Zu der. Figur 1 kann vorausgeschickt werden, daß je nach Wahl der Förderbeginnzeitpunkte ϕ_{FB} diese eindeutig dadurch charakterisierten Druckverläufen zugeordnet werden können. Bezogen auf die sich unter stationärer, schadstoffoptimierter Regelung und damit einem Einspritzzeitpunkt ϕ_{FBa} kurz vor der oberen Totpunktlage OT des Kolbens einstellenden Zylinderdruckverläufe p_{z1a}, p_{z2a}, liegt das bei Betrachtung jeweils desselben Druckverlaufs erreichte Druckmaximum um so höher, je weiter der Förderbeginn vor OT verstellt wird. Gleichzeitig mit der Lage des Druckmaximums, übt jede Förderbeginnverstellung auch einen Einfluß auf die Form des sich damit ergebenden Zylinderdruckverlaufs aus.

Weil das erfindungsgemäße Verfahren jedoch den Verbrennungsdruckverlauf während der Kompensions- und Expansionstakte beeinflußt, ist im folgenden die Wirkungsweise des erfindungsgemäßen Verfahrens zur variablen last- und motorbetriebsangepaßten Förderbeginnregelung exemplarisch anhand der beiden in Figur 1 dargestellten Zylinderinnendruckverläufe beschrieben.

Ausgehend von dem stationär ausgeregelten Betriebszustand der Brennkraftmaschine vor der Lastzuschaltung, stellt sich bei einem niedrigen Ladeluftdruck p_{LL2} nach Füllungserhöhung der Zylinderdruckverlauf p_{z2a} ein. Entsprechend der herkömmlichen Regelungsart schließen die Gaswechselventile bei einem Kurbelwinkel ϕ₀, die Zylinderfüllung wird in Folge der Kolbenhubbewegung verdichtet und erreicht schließlich in OT ihr Druckmaximum. Kurz vor OT setzt bei einem Kurbelwinkel ϕ_{FBa} die Brennstofförderung ein, worauf mit gewissem Einspritz- und Zündverzug Δϕa bei einem Kurbelwinkel ϕ_{VBa} die Verbrennung im Zylinder beginnt.

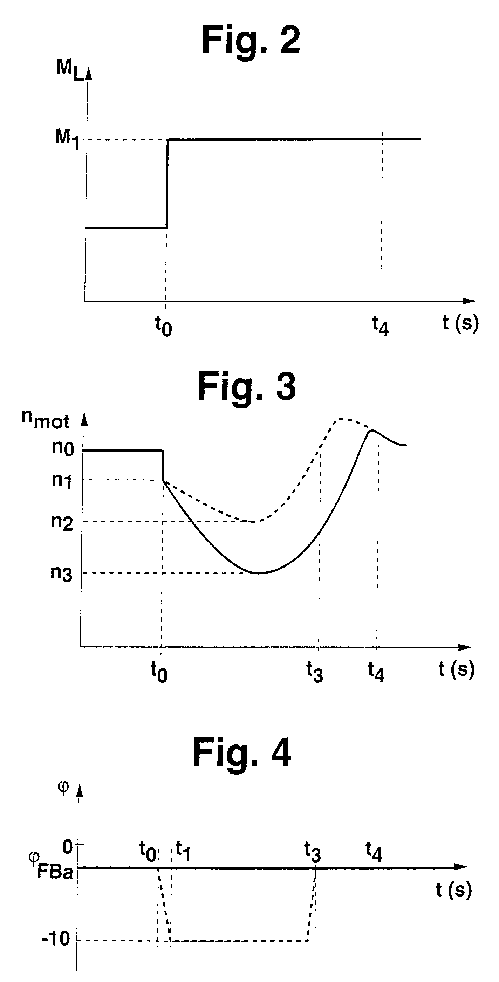

Setzt nun, entsprechend des in den Figuren 2 bis 6 aufgezeigten Wirkzusammenhangs, eine plötzliche Lastzuschaltung ein, dann wird der Brennkraftmaschine ebenso plötzlich eine entsprechend größere Leistung P_{L} abverlangt. Da das System Abgasturbolader-Brennkraftmaschine bei größeren Lastanforderungen nicht in der Lage ist, den der Lastanforderung entsprechenden neuen Soll-Betriebspunkt der Brennkraftmaschine-Generatoranlage ohne zeitliche Verzögerung einzunehmen, wird die aufgeladene Brennkraftmaschine im bekannten Regelbetrieb auf den Soll-Betriebspunkt höherer Laststufe überführt, bzw. beschleunigt. Die Ursachen und Gründe für die Dauer dieses transienten Betriebsbereichs wurden eingangs beschrieben. Hervorzuheben ist, daß die Zeitdauer des Übergangsbereichs maßgebend von der zur Motorbeschleunigung verfügbaren Leistung abhängt. Genauer betrachtet steht nur der die abgeforderte Antriebsleistung p_{L} übersteigende Leistungsanteil des Motors zu dessen Beschleunigung zur Verfügung. Das Leistungsangebot jedoch ist direkt mit dem Ladeluftdruck p_{LL} verknüpft, welcher wiederum lediglich entsprechend des Beschleunigungsvermögens des Abgasturboladers gesteigert werden kann.

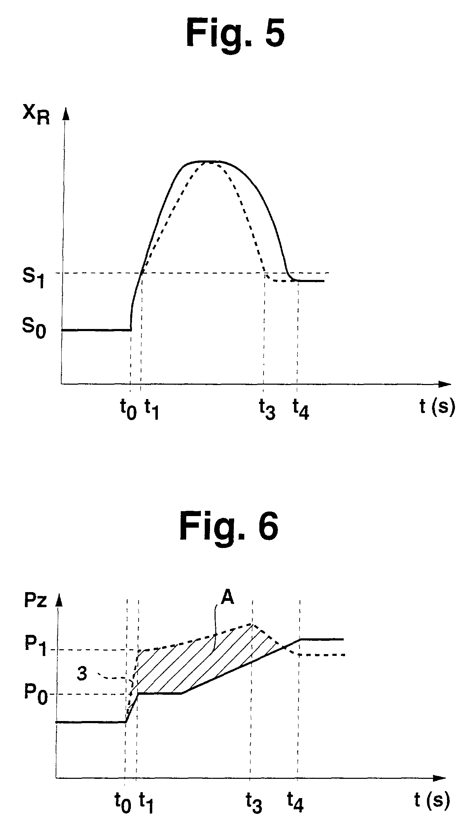

Dieses komplexe Zusammenspiel findet auch bei dem erfindungsgemäßen Verfahren im wesentlichen unverändert statt. Bekanntermaßen spricht der Brennstoffmassenregler bedingt durch den Drehzahlabfall bei der Lastaufschaltung an, in dem die Füllung proportional zu der Strecke xR (Figur 5) vergrößert wird. Dadurch wird vom Zeitpunkt des Drehzahleinbruchs an eine dem Soll-Betriebspunkt hoher Laststufe (S1) entsprechende größere Brennstoffmasse in den Brennraum gefördert. Die damit bewirkte langsam ansprechende Drucksteigerung in Richtung des Pfeiles 1, ist in Figur 1 stellvertretend in Form des Druckverlaufs p_{z1a} dargestellt, der von dem nach bereits erfolgtem Beschleunigungsbetrieb aufgebauten, höheren Ladeluftdruck p_{LL1} ausgeht. Der Druckverlauf p_{z1a} bezieht sich ebenso wie Verlauf p_{z2a} auf das herkömmliche Regelverfahren; entsprechend gelten, abgesehen von dem höheren Ladeluftdruck p_{LL1}, die gleichen Erläuterungen.

In Figur 1 deutlich zu erkennen ist, daß sowohl das Druckmaximum des Verlaufs p_{z2a} als auch der maximale Wert des Druckverlaufs p_{z1a} unterhalb des theoretisch größtmöglichen Leistungsvermögen, der pₘₐₓ-Grenze, liegen. Hierauf zielt nun die Erfindung ab und schafft neben einer kurzfristig verfügbaren Leistungssteigerung auch gleichzeitig eine möglichst optimale Ausschöpfung des Leistungspotentials zur Beschleunigung der Brennkraftmaschine.

Erfindungsgemäß wird zunächst das herkömmliche Lastausregelverfahren beibehalten, um damit grundsätzlich den Übergang des Brennkraftmaschinen-Betriebs vom stationären Ausgangsbetriebspunkt zum belastungsbedingt vorgegebenen Soll-Betriebspunkt höherer Laststufe auszuregeln. Zusätzlich wird nun im wesentlichen mit der Lastzuschaltung und dem damit gestarteten Regelmechanismus zur Beschleunigung der Brennkraftmaschine der Förderbeginn verstellt. In Figur 1 zeigt sich dies daran, daß unmittelbar nach der Lastaufschaltung zum Zeitpunkt t₀ aus den Figuren 3 bis 6, zu dem der Motorbetrieb durch den Druckverlauf P_{z2a} gekennzeichnet ist, der Förderbeginn FB von dem bisher gewählten Kurbelwinkel ϕ_{FBa} nunmehr gezielt auf den für den vorherrschenden Motorbetriebzustand frühest möglichen Förderbeginn in Richtung "früh", auf den Kurbelwinkel ϕ_{FBb}, verstellt wird. Bei dem in den Figuren 1 bis 6 dargestellten Beispiel wird der Förderbeginn FB beispielhaft um ein Δϕ von 10 ° KW vorverstellt. Grundsätzlich ist der Betrag von Δϕ jedoch von der Auslegung des Motors abhängig.

Initiiert durch die Förderbeginnverstellung Δϕ auf ϕ_{FBb}, setzt die Verbrennung nun mit einem systembedingten Einspritz- und Verbrennungsverzug nach einem Kurbelwinkel von Δϕ_{b} zum Zeitpunkt ϕ_{VBb} ein. Entsprechend des oben beschriebenen Einflusses des Förderbeginns auf den Verbrennungs- und damit auch auf den Druckverlauf im Zylinder, stellt sich damit der Druckverlauf p_{z2b} ein. Deutlich zu erkennen ist hierbei der gegenüber Verlauf p_{z2a} bedeutend früher einsetzende Druckanstieg und zusätzliche Druckaufbau p_{z2b}. Dies stellt die erfindungsgemäß erschlossene Leistungssteigerung dar, die zur Verbesserung der Lastannahme dient. Ebenso ermöglicht sie eine kurzfristig einsetzbare Erhöhung der Brennkraftmaschinenleistung in Betriebsbereichen, in denen speziell hoch aufgeladene Brennkraftmaschinen durch ihr systembedingtes träges Verhalten nicht in der Lage sind, das Leistungspotential der Brennkraftmaschine auszuschöpfen.

Unter der Wirkung der Leistungserhöhung durch das Ansprechen des Reglers und der damit zugeregelten größeren Brennstoffmasse sowie der Förderbeginnverstellung, erreicht der Motor das Druckniveau p_{z1}. Bleibt der Förderbeginn unverändert auf ϕ_{FBb} vorverstellt, so gestaltet sich der Druckverlauf bei dem mit zeitlicher Verzögerung erreichten höheren Ladeluftdruck p_{LL1} entsprechend des in Figur 1 eingetragenen Verlaufs p_{z1b}. Damit übersteigt der förderbeginngeregelte Zyinderinnendruck p_{z}, zunächst unerwünscht, den für stationären Betrieb zulässigen Spitzendruck p ₘₐₓ im Zylinder. Da jedoch durch eine solche Überschreitung eine noch größere Motorleistung zur Beschleunigung zur Verfügung stünde, sieht eine weitere Variante des erfindungsgemäßen Verfahrens gezielt eine zeitlich begrenzte Überschreitung vor. Eine Überschreitung auf Dauer ist jedoch grundsätzlich unerwünscht.

Dazu wird der Zylinderinnendruck p_{z} und/oder der Ladeluftdruck p_{LL} laufend überwacht und als Eingangsgröße zur Begrenzung der Förderbeginnvorverstellung verwendet. Soll, wie bei dem beschriebenen Ausführungsbeispiel, eine Zylinderdrucksteigerung über die pₘₐₓ-Grenze hinaus vermieden werden, wird nach Lastaufschaltung der Förderbeginn mit zunehmendem ladeluftdruckabhängigen Druckanstiegs nach "spät" geregelt. In Figur 1 ist die auf diese Weise ausgeregelte Wanderung der Lage des Verbrennungsbeginn-Druckpunktes während der Beschleunigungsphase von p_{LL2} auf p_{LL1} als Verlauf 2 eingetragen. Bei erreichtem Ladeluftdruck p_{LL1} ist der Förderbeginn wieder auf den Kurbelwinkel ϕ_{FBa} gestellt und damit das erlaubte Druckmaximum pₘₐₓ eingehalten.

Diese an den transienten Motorbetrieb angepaßte dynamische Regelung der Förderbeginnvorverstellung macht somit eine Ausschöpfung des maximal zur Verfügung stehenden Leistungspotentials der Brennkraftmaschine möglich. Sie kann grundsätzlich in allen Betriebsbereichen zur Leistungssteigerung eingesetzt werden. Der größte Effekt ist jedoch in dem beschriebenen transienten Beschleunigungsbetrieb von abgasturboladeraufgeladenen Dieselmotoren zu erzielen, da bei diesem Einsatz ganz bewußt das durch das verzögerte Ansprechen des Abgasturboladers existierende Ladeluftdefizit zur Vorverstellung des Förderbeginns und zur Erhöhung der Leistungsausbeute genutzt und zur Optimierung der Abgabeleistung des Systems Abgasturbolader-Brennkraftmaschine eingesetzt werden kann.

Aufgrund dieser Bedeutung ist nachfolgend am Beispiel eines abgasturboladeraufgeladenen Generatordieselmotors eine Ausführungsform des erfindungsgemäßen Verfahrens zur Verbesserung des Lastannahmeverhaltens mittels Umschalten in einen Regelbetrieb mit nach dynamischen Motorbetriebsgesichtspunkten verstellbarem Förderbeginn in Figuren 2 bis 6 aufgezeigt. Diese Brennkraftmaschine (nicht dargestellt) ist mit einer Motorbetriebsregelung und einem Einspritzsystem ausgestattet, die eine beliebige Verstellbarkeit des Förderbeginns zulassen. In den abgebildeten Diagrammen sind die mit dem erfindungsgemäßen Verfahren erhaltenen Betriebswertverläufe gestrichelt und diejenigen eines konventionellen Regelverfahrens ausgezogen einander gegenübergestellt.

In Figur 2 ist schematisch der Verlauf des Lastdrehmoments M_{L} über der Zeit t aufgetragen. Ausgehend von einem lastfreien Betrieb nimmt das Lastmoment M_{L} im Zeitpunkt t₀ sprunghaft einen konstanten Wert M₁ an, welcher über längere Zeit beibehalten wird. Dieses in Figur 2 dargestellte idealisierte Lastprofil entspricht in etwa dem Belastungsfall bei Generatoraufschaltung, wo beispielsweise dem in Leerlauf betriebenen Antriebsmotor eines Notstromaggregates bei Stromausfall der Generator zugeschaltet wird, um binnen kürzester Zeit eine Stromversorgung mit konstanter Spannung und vorgegebener Stromstärke sicherzustellen.

Die Auswirkungen einer derartigen, plötzlichen Leistungsabforderung auf den zeitlichen Verlauf der Motordrehzahl nₘₒₜ ist in Figur 3 gezeigt. Zunächst wird die unbelastete Brennkraftmaschine bei einer Leerlaufdrehzahl n₀ betrieben, bis im Zeitpunkt t₀ schlagartig die Last zugeschaltet wird, worauf die Motordrehzahl ebenso abrupt auf einen niedrigeren Wert n₁ abfällt. Der Drehzahleinbruch wird mittels geeigneter Sensoren von einer Regelelektronik erfaßt, die den gemessenen Motordrehzahlwert nₘₒₜ kontinuierlich mit einem vorgegebenen Drehzahlgrenzwert n₁ vergleicht. Gleichzeitig wird ausgehend von dem aufgenommenen Drehzahlsignal die zeitliche Änderung der Drehzahl, sprich der Motordrehzahlgradient, ermittelt.

Unterschreitet die momentane Drehzahl dabei den hier auf die Drehzahl n₁ gesetzten Grenzwert, ist eine erste Bedingung erfüllt und es wird, als zweite Bedingung, der zuletzt bestimmte Drehzahlgradient, herangezogen.

Neben der Drehzahlerfassung und Gradientenermittlung können beispielsweise der Ladeluftdruck, die Turboladerdrehzahl oder aber auch die von der Gesamtanlage abgenommene elektrische Leistung meßtechnisch aufgenommen und von der Regeleinrichtung zur Anpassung des Förderbeginns an den dynamischen Motorbetrieb verwendet werden.

Da der Gradient im vorliegenden Ausführungsbeispiel bei Unterschreiten des Drehzahlgrenzwertes n₁ negatives Vorzeichen besitzt - was darauf hindeutet, daß die Motordrehzahl auch im weiteren zeitlichen Verlauf weiter abfallen würde - wird der Förderbeginn erfindungsgemäß nach "früh" verstellt. In Figur 4 ist hierzu der Förderbeginn-Kurbelwinkelverlauf ϕ_{FB} ausgehend vom Förderbeginn bei stationärem Motorbetrieb als Bezugsnullinie über der Zeit aufgetragen. Zum Zeitpunkt t₀ setzt die Vorverstellung des Förderbeginns ein und erreicht im Zeitpunkt t₁ den vorgesehenen Förderbeginn bei einem Kurbelwinkel von 10 ° vor OT. Sobald der Förderbeginn im Zeitpunkt t₁ um den vorgesehenen Kurbelwinkel Δϕ, nach "früh" verstellt ist, hier 10° KW vor OT, stellt sich im Brennraum ein Verbrennungsverlauf gemäß p_{z2b} in Figur 1 ein. Die damit erreichte zusätzliche Steigerung des Zylinderinnendrucks p_{z} entspricht einer Erhöhung des inneren Wirkungsgrades und hat damit auch eine Zunahme des Motordrehmoments zur Folge. Dieses gegenüber herkömmlichen Motorregelverfahren erfindungsgemäß erzielte Leistungsplus wirkt einem weiteren Drehzahlabfall aktiv entgegen. Daher fällt die Motordrehzahl nₘₒₜ lediglich auf eine Drehzahl n₂ ab (Figur 3), die deutlich höher liegt, als das Drehzahltief n₃ bei konventioneller Regelweise. Demzufolge wird auch die geforderte Ausgangsdrehzahl n₀ wieder bereits im Zeitpunkt t₃ und nicht erst zum Zeitpunkt t₄ erreicht, wie dies ohne Förderbeginnvorverstellung der Fall ist.

Gleichzeitig mit der Förderbeginnvorverstellung wird von der Regelelektronik ebenfalls in Abhängigkeit von der Motordrehzahl nₘₒₜ ein Steuersignal an den Kraftstoffregler abgegeben, worauf dieser die in den Brennraum zugeführte Kraftstoffmenge erhöht (Figur 5). Da die Kraftstoffmengenzufuhrregelung neben der Motordrehzahl nₘₒₜ auch an das Abtriebsdrehmoment M_{L} gekoppelt ist, entspricht die erforderliche Füllungszustellung X_{R} in der ersten Phase des Drehzahleinbruchs auf n₁ bis zum Zeitpunkt t₁ der Füllung konventioneller Motorregelung. Ab einem Regelweg s₁ zeigt die erfindungsgemäße Förderbeginnverstellung (gestrichelter Verlauf) erste Wirkung, worauf sich dann auch unterschiedliche Füllungsverläufe ergeben.

In Figur 6 ist diese vorübergehende Leistungsteigerung anhand gemessener Zylinderdruckverläufe pz der abgasturboladeraufgeladenen Brennkraftmaschine verdeutlicht. In diesem Diagramm ist der tatsächliche Zylinderdruckverlauf p_{z} eines Zylinders bei konventioneller Lastausregelung durch entsprechende Reaktion des Drehzahlreglers dem gestrichelt dargestellten Druckverlauf desselben Zylinders bei Lastausregelung nach dem erfindungsgemäßen Verfahren mit dynamischer Förderbeginnvorverstellung gegenübergestellt. Beiden Druckverläufen liegt ein Motorbetrieb mit identischer Füllung und konstantem Lastmoment M_{L} zu Grunde. Der erfindungsgemäß erreichte Leistungszugewinn ist als die zwischen beiden Kurvenverläufen eingeschlossene Fläche A verkörpert. Mit einsetzender Lastausregelung zum Zeitpunkt t₀ mittels des Drehzahlreglers, steigt aufgrund der größeren, zugeführten Kraftstoffmenge der Zylinderinnendruck in bekannter Weise in Richtung des Pfeiles 1 (Figur 1) an. Im selben Moment wird erfindungsgemäß nun auch der Förderbeginn nach "früh" verstellt, womit der in Figur 1 als Verlauf P_{z2b} gezeigte theoretisch erreichbare höhere Zylinderinnendruck freigesetzt wird. Dieser spiegelt sich in der Figur 6 in Form einer größeren Steigerung der Druckkurve 3 und einem Anstieg auf einen höheren Druckwert p₁ wieder. Das durch Verlagerung der Verbrennungskurve von p_{z2a} auf p_{z2b} gewonnene Mehr an Leistung ist auch im weiteren Verlauf dem bisherigen Leistungsvermögen des Motors überlagert. Insbesondere hat der erfindungsgemäß erreichte Zylinderinnendruck denjenigen Wert p₁ zum Zeitpunkt t₃ bereits erreicht, der dem auszuregelndem Betriebspunkt höherer Laststufe entspricht.

Abgesehen von der angestrebten möglichst großen Leistungserhöhung zur Motorbeschleunigung, sollte das Leistungspotential für die Brennkraftmaschine schadfrei ausgeschöpft werden. Um die vorgegebenen Belastungsgrenzen auch trotz Förderbeginnvorverstellung nicht zu überschreiten, wird ein Druckschwellwert vorgegeben, mit dem der aktuelle Zylinderinnendruck laufend verglichen wird. Mit zunehmender Erholung der Anlage, die durch eine Zunahme des Drehzahlgradienten (positives Vorzeichen) und/oder Überschreiten des vorgegebenen Drehzahlgrenzwerts erkannt werden kann, wird der Förderbeginn im Zeitpunkt t₃ wieder nach "spät", beispielsweise auf den Kurbelwinkel ϕ_{FBa} zurückgestellt. Der Rückstellzeitpunkt bzw. das Rückstellkriterium kann abgesehen von den vorgegebenen Motorbelastungsgrenzen ferner an andere aktuelle Betriebskenngrößen, wie z. B. den Ladedruck, gekoppelt sein. Ziel ist es, die vorübergehende Leistungssteigerung in einer Weise zu regeln, die ein möglichst schnelles Ausregeln des Motors auf den der Belastung entsprechenden Betriebspunkt ermöglicht.

Mit dem erfindungsgemäßen Verfahren eines nach dynamischen Motorbetriebspunkten verstellbaren variablen Förderbeginns, kann somit der indizierte Mitteldruck unter Ausnutzung der gegebenen mechanischen Grenzen bei Bedarf jederzeit dadurch maximiert werden, daß der ansonsten bei abgasturboladeraufgeladenen Dieselmotoren durch das Betriebsverhalten eines Turboladers zwangsweise bedingte, verzögerte Ladedruckaufbau durch eine entsprechend leistungssteigernde Beeinflußung des Verbrennungsprozesses leistungserzeugend ausgenutzt werden kann.

### Bezugszeichen

- 1: Druckanstiegsrichtung, quasistationär
- 2: Lage des Verbrennungsbeginn-Druckpunktes
- 3: zeitlicher Zylinderinnendruckanstieg

- p_{z1a}: Druckverlauf bei FB "spät"
- p_{z2a}: Druckverlauf bei FB "spät"
- p_{z1b}: Druckverlauf bei Förderbeginn "früh"
- p_{z2b}: Druckverlauf bei Förderbeginn "früh"
- p_{z}: Zylinderinnendruck
- ϕ: Kurbelwinkel
- ϕ_{FBb}: Förderbeginn, früh
- ϕ_{FBa}: Förderbeginn, stationär
- pLL1: Ladeluftdruck
- pLL2: Ladeluftdruck
- ϕ₀: Gaswechselventile schließen
- Δϕₐ: Einspritz- u. Zündverzugwinkel
- Δϕ_{b}: Einspritz- u. Zündverzugwinkel
- ϕVBa: Verbrennungsbeginn, spät
- ϕVBb: Verbrennungsbeginn, früh
- pₘₐₓ: maximal zulässiger Zylinderinnendruck (Belastungsgrenze)

## Patentansprüche

1. Verfahren zur Regelung des Lastannahmeverhaltens einer Brennkraftmaschine mit einem oder mehreren Turboladern, insbesondere eines Dieselmotors mit Abgasturboaufladung als Antrieb eines Elektrizitätserzeugers, bei dem die Brennkraftmaschine über die Kraftstoffzufuhr in Abhängigkeit mindestens einer Betriebkenngröße im wesentlichen in optimierten stationären Betriebszuständen jeweils den Motoranforderungen entsprechend betrieben wird, wobei die Brennkraftmaschine ausgehend vom Regelbetrieb nach stationären Gesichtspunkten in Betriebsbereichen mit auftretender Drehzahldrückung des Motors vorübergehend in Abhängigkeit von Betriebsparametern der Brennkraftmaschine dynamisch gesteuert wird, wodurch die Brennkraftmaschine in Richtung hoher Laststufe beeinflußt wird,
dadurch **gekennzeichnet,**
daß bei Lastzuschaltung eine vorübergehende Förderbeginnvorverstellung (FB) vorgenommen wird, welche last- und motorbetriebsangepaßt ist.

2. Verfahren nach Anspruch 1, dadurch **gekennzeichnet**, daß die Förderbeginnvorverstellung (FB) in Abhängigkeit des Zylinderinnendrucks (p_{z}) erfolgt.

3. Verfahren nach Anspruch 1, dadurch **gekennzeichnet,** daß die Förderbeginnvorverstellung (FB) unmittelbar auf einen frühesten Zeitpunkt bzw. Kurbelwinkel verstellt wird.

4. Verfahren nach Anspruch 2 oder 3, dadurch **gekennzeichnet,** daß die Förderbeginnvorverstellung (FB) in Abhängigkeit des Zylinderinnendrucks (p_{z}) und/oder des Ladeluftdrucks (p_{LL}) begrenzt wird, indem der Zylinderinnendruck (p_{z}) mit einem maximal zulässigen Zylinderinnendruck (pₘₐₓ) verglichen wird.

5. Verfahren nach einem der vorausgegangenen Ansprüche,
dadurch **gekennzeichnet**, daß die Förderbeginnvorverstellung (FB) aktiviert wird, wenn die Motordrehzahl (nₘₒₜ) einen Motordrehzahlgrenzwert (n1) unterschreitet.

6. Verfahren nach einem der vorausgegangenen Ansprüche,
dadurch **gekennzeichnet**, daß die Förderbeginnvorverstellung (FB) aktiviert wird, wenn ein aus der Motordrehzahl (nₘₒₜ) ermittelter Drehzahlgradient ein negatives Vorzeichen aufweist.

7. Verfahren nach einem der vorausgegangenen Ansprüche,
dadurch **gekennzeichnet**, daß die Förderbeginnvorverstellung (FB) bei Lastzuschaltung mit einer Störgrößenaufschaltung kombiniert wird.

8. Verfahren nach Anspruch 1, dadurch **gekennzeichnet**, daß
die Förderbeginnvorverstellung (FB) für eine festgelegte Zeitperiode aktiviert wird und nach Ablauf der Zeitperiode auf den dem auszuregelnden stationären Betriebszustand höherer Laststufe entsprechenden Förderbeginn verstellt wird.

9. Verfahren nach Anspruch 1, dadurch **gekennzeichnet**, daß die Förderbeginnvorverstellung (FB) so lange nach früh verstellt wird, bis die Brennkraftmaschine die nach Lastzuschaltung auszuregelnde höhere Laststufe erreicht hat.

10. Verfahren nach Anspruch 8 oder 9, dadurch **gekennzeichnet**, daß der Betriebspunkt höherer Laststufe dann als erreicht gilt, wenn die Motordrehzahl (nₘₒₜ) einen Motordrehzahlgrenzwert überschreitet und/oder der Drehzahlgradient eine bestimmte positive Steigung angenommen hat.

11. Verfahren nach Anspruch 8, 9 oder 10, dadurch **gekennzeichnet**, daß die Förderbeginnrückstellung in Abhängigkeit des Ladedrucks (pLL) erfolgt.

## Claims

1. Process for regulating the design load behaviour of an internal combustion engine having one or more turbochargers, in particular a diesel engine, with exhaust gas turbocharging as a drive of an electricity generator, in which the internal combustion engine is operated by means of the fuel supply as a function of at least one operating characteristic variable essentially in optimized steady operating states, in each case in accordance with the engine requirements; the internal combustion engine being temporarily dynamically controlled as a function of operating parameters of the internal combustion engine, on the basis of the regulatory operation according to steady-state criteria in operating ranges with reduction of the rotational speed of the motor, the internal combustion engine being influenced in the direction of a high load stage, characterized in that when the load is added a temporary pre-adjustment of the start of feeding (FB) is performed which is adapted to the load and engine operation.

2. Method according to Claim 1, characterized in that the pre-adjustment of the start of feeding (FB) is carried out as a function of the cylinder internal pressure (p_{z}).

3. Method according to Claim 1, characterized in that the pre-adjustment of the start of feeding (FB) is adjusted directly to the earliest time or crank angle.

4. Method according to Claim 2 or 3, characterized in that the pre-adjustment of the start of feeding (FB) is limited as a function of the cylinder internal pressure (p_{z}) and/or the charge air pressure (p_{LL}) by comparing the cylinder internal pressure (p_{z}) with a maximum admissible cylinder internal pressure (pₘₐₓ).

5. Method according to one of the preceding claims, characterized in that the pre-adjustment of the start of feeding (FB) is activated if the engine speed (nₘₒₜ) drops below an engine speed limiting value (n1).

6. Method according to one of the preceding claims, characterized in that the pre-adjustment of the start of feeding (FB) is activated if a rotational speed gradient determined from the engine speed (nₘₒₜ) has a negative sign.

7. Method according to one of the preceding claims, characterized in that the pre-adjustment of the start of feeding (FB) is combined with the application of an interference variable when a load is connected.

8. Method according to Claim 1, characterized in that the pre-adjustment of the start of feeding (FB) is activated for a fixed time period and after expiry of the time period adjustment to the start of feeding which corresponds to the higher load stage steady operating state which is to be eliminated is carried out.

9. Method according to Claim 1, characterized in that the pre-adjustment of the start of feeding (FB) is adjusted in the early direction until the internal combustion engine has reached the higher load stage which is to be eliminated after the load is connected.

10. Method according to Claim 8 or 9, characterized in that the operating point of a higher load stage is considered to have been reached if the engine speed (nₘₒₜ) exceeds an engine speed limiting value and/or the rotational speed gradient has assumed a specific positive gradient.

11. Method according to Claim 8, 9 or 10, characterized in that the resetting of the start of feeding is carried out as a function of the charge pressure (p_{LL}).

## Revendications

1. Procédé de régulation du comportement sous une charge supposée d'un moteur à combustion interne avec un ou plusieurs turbocompresseur(s) de suralimentation, en particulier d'un moteur Diesel avec suralimentation par turbocompresseur à gaz d'échappement pour l'entraînement d'un générateur électrique, dans lequel on commande à chaque fois le moteur à combustion interne suivant les exigences instantanées du moteur, par l'admission de carburant en fonction d'au moins une grandeur caractéristique du fonctionnement essentiellement dans des conditions de fonctionnement stationnaires optimisées, dans lequel on règle dynamiquement le moteur à combustion interne à partir du fonctionnement régulé selon des modes stationnaires, dans des domaines de fonctionnement avec abaissement provoqué de la vitesse de rotation du moteur, temporairement en fonction de paramètres de fonctionnement du moteur à combustion interne, ce qui influence le moteur à combustion interne dans le sens d'un niveau de charge plus élevé, caractérisé en ce que, lors d'une application de charge, on opère un préréglage temporaire du début d'alimentation (FB), qui est adapté à la charge et au fonctionnement du moteur.

2. Procédé suivant la revendication 1, caractérisé en ce que l'on effectue le préréglage du début d'alimentation (FB) en fonction de la pression à l'intérieur des cylindres (p_{z}).

3. Procédé suivant la revendication 1, caractérisé en ce que l'on établit le préréglage du début d'alimentation (FB) directement à un instant très précoce respectivement à un angle très précoce de la manivelle.

4. Procédé suivant la revendication 2 ou 3, caractérisé en ce qu'on limite le préréglage du début d'alimentation (FB) en fonction de la pression à l'intérieur des cylindres (p_{z}) et/ou de la pression de l'air de suralimentation (p_{LL}), en comparant la pression à l'intérieur des cylindres (p_{z}) à une pression maximale admissible à l'intérieur des cylindres (pₘₐₓ).

5. Procédé suivant l'une quelconque des revendications précédentes, caractérisé en ce que l'on active le préréglage du début d'alimentation (FB) lorsque la vitesse de rotation du moteur (nₘₒₜ) descend en dessous d'une valeur limite (n1) de la vitesse de rotation du moteur.

6. Procédé suivant l'une quelconque des revendications précédentes, caractérisé en ce que l'on active le préréglage du début d'alimentation (FB) lorsqu'un gradient de la vitesse de rotation déterminé à partir de la vitesse de rotation du moteur (nₘₒₜ) présente un signe négatif.

7. Procédé suivant l'une quelconque des revendications précédentes, caractérisé en ce que, lors d'une application de charge, on combine le préréglage du début d'alimentation (FB) avec une introduction d'une grandeur perturbatrice.

8. Procédé suivant la revendication 1, caractérisé en ce que l'on active le préréglage du début d'alimentation (FB) pour un laps de temps déterminé et, après l'écoulement du laps de temps, on le règle au début d'alimentation correspondant à l'état de fonctionnement stationnaire de plus haut niveau de charge à réguler.

9. Procédé suivant la revendication 1, caractérisé en ce que l'on règle le préréglage du début d'alimentation (FB) au niveau précoce jusqu'à ce que le moteur à combustion interne ait atteint le niveau de charge plus élevé à réguler après l'application d'une charge.

10. Procédé suivant la revendication 8 ou 9, caractérisé en ce que l'on considère que le point de fonctionnement au niveau de charge plus élevé est atteint lorsque la vitesse de rotation du moteur (nₘₒₜ) dépasse une valeur limite de la vitesse de rotation du moteur et/ou que le gradient de la vitesse de rotation a atteint une pente positive déterminée.

11. Procédé suivant la revendication 8, 9 ou 10, caractérisé en ce que l'on effectue la remise à zéro du début d'alimentation en fonction de la pression d'admission (pLL).
